(19) Europäisches Patentamt
European Patent Office
Office européen des brevets

(11) EP 2 014 349 A1

(12) EUROPÄISCHE PATENTANMELDUNG

(43) Veröffentlichungstag:
**14.01.2009 Patentblatt 2009/03**

(21) Anmeldenummer: **08014127.8**

(22) Anmeldetag: **26.10.1999**

(51) Int Cl.:
***B01D 71/52*** *(2006.01)* ***C08L 71/00*** *(2006.01)*
***C08G 73/18*** *(2006.01)* ***C08J 5/22*** *(2006.01)*
***H01M 8/02*** *(2006.01)* ***H01M 8/10*** *(2006.01)*
***B01J 39/18*** *(2006.01)* ***B01D 61/14*** *(2006.01)*
***B01D 61/42*** *(2006.01)*

(84) Benannte Vertragsstaaten:
**AT BE CH CY DE DK ES FI FR GB GR IE IT LI LU MC NL PT SE**

(30) Priorität: **09.11.1998 DE 19851498**

(62) Dokumentnummer(n) der früheren Anmeldung(en) nach Art. 76 EPÜ:
**99955884.4 / 1 144 100**

(71) Anmelder: **BASF Fuel Cell GmbH**
**65926 Frankfurt am Main (DE)**

(72) Erfinder:
- **Soczka-Guth, Thomas Dr.**
  **89601 Schelklingen (DE)**
- **Frank, Georg Dr.**
  **72074 Tübingen (DE)**
- **Baurmeister, Jochen Dr.**
  **65817 Eppstein (DE)**
- **Pawlik, Jürgen Dr.**
  **35088 Battenberg (DE)**
- **Knauf, Rüdiger Dr.**
  **65582 Aull (DE)**

(74) Vertreter: **Luderschmidt, Schüler & Partner**
**Patentanwälte**
**John-F.-Kennedy-Strasse 4**
**65189 Wiesbaden (DE)**

Bemerkungen:
Diese Anmeldung ist am 07-08-2008 als Teilanmeldung zu der unter INID-Code 62 erwähnten Anmeldung eingereicht worden.

# (54) Membranen aus sulfoniertem aromatischen Polyetherketon und Polybenzimidazol, sowie deren Verwendung

(57) Beschrieben wird eine Membran enthaltend 30 - 99,5 Gew.% eines sulfonierten aromatischen Polyetherketons, das eine Ionenaustauscherkapazität von 1,3 bis 4,0 meq ($-SO_3H$)/g Polymer aufweist, und 0,5-70 Gew.% eines Polybenzimidazols.
Diese Membran wird vorzugsweise in Brennstoffzellen eingesetzt.

EP 2 014 349 A1

## Beschreibung

Die vorliegende Erfindung betrifft eine Polymerzusammensetzung, die sich insbesondere zur Herstellung von Membranen eignet sowie den Einsatz dieser Membranen in Brennstoffzellen, Hochleistungskondensatoren, Dialysegeräten und der Ultrafiltration.

Brennstoffzellen sind elektrochemische Energieumwandler, die sich besonders durch ihren hohen Wirkungsgrad auszeichnen. Polymerelektrolyt-Brennstoffzellen (nachstehend PEM genannt) zeichnen sich unter den verschiedenen Arten von Brennstoffzellen durch ihre hohe Leistungsdichte und ihr geringes Leistungsgewicht aus.

Herkömmliche Brennstoffzellen arbeiten in der Regel mit Membranen auf der Basis von fluorhaltigen Polymeren, beispielsweise mit dem Material Nafion®.

Für die Kommerzialisierung der Brennstoffzellentechnologie insbesondere für Anwendungen in größerem Maßstab ist es notwendig, die Herstellkosten der zum Einsatz kommenden Materialien zu reduzieren ohne daß dabei eine Einbuße an Leistungsfähigkeit gegenüber den herkömmlich verwendeten Materialien in Kauf genommen werden muß.

Protonenleitende Membranen auf Basis von sulfonierten Polyetherketonen sind bekannt, beispielsweise aus einem Bericht Artikel von A. Steck in Proc. 1st Inter. Symp. On New Materials For Fuel Cell Systems, Montreal 1995, pp 74. oder aus einem Artikel von C.A. Linkous et al. in Int. J. Hydrogen Energy, Vol. 23, No. 7, pp. 525-9 (1998).
In den WO-A-96/29359 und WO-A-96/29360 werden Polymerelektrolyte aus sulfonierten aromatischen Polyetherketonen und die Herstellung von Membranen aus diesen Materialien beschrieben.
In der EP-A-0152161 werden überwiegend aus der Wiederholungseinheit -O-Ar-CO-Ar- bestehende Polyetherketone (nachfolgend PEK genannt) und daraus hergestellte geformte Gebilde beschrieben.

Sulfonierte, streng alternierende Polyetherketone mit der Wiederholungseinheit -O-Ar-CO-Ar- werden in J. Polym. Sci.: Vol. 23, 2205-2222, 1985 beschrieben. Der Aufbau der Polyetherketone geschieht hier durch elektrophilen, und nicht wie in EP-A-0152161 beschrieben, durch nucleophilen Angriff. Die Polymeren wurden durch Sulfurtrioxid unter Verwendung von Triethylphosphat in Dichlorethan sulfoniert. Eine weitere, in dieser Literaturstelle verwendete Sulfonierungsmethode ist die Chlorsulfonierung mit Chlorsulfonsäure. Allerdings wird bei dieser Methode, abhängig vom Grad der Sulfonierung, auch ein Abbau des Molekulargewichtes beobachtet. Es schließt sich die Amidierung des Säurechlorides an. Als mögliches Einsatzgebiet derartiger Polymere wird die Verwendung als Ionenaustauscher oder als Entsalzer angegeben. Der Einsatz in Brennstoffzellen wird nicht beschrieben. Eigenschaftsprofile, die den Einsatz in Brennstoffzellen nahelegen, kommen ebenso nicht vor.

Membranen aus homogenen Polymerfegierungen auf Basis von sulfonierten, aromatischen Polyetherketonen, Polyethersulfonen und einem dritten, hydrophilen Polymer sind aus der EP-A-0688824 auch für den Einsatz in elektrochemischen Zellen erwähnt.

Aus der WO-A-98/07164 sind Mischungen aus hochmolekularen Säuren (beispielsweise sulfonierten Polyetherketonen) und hochmolekularen Basen (beispielsweise Polybenzimidazolen) bekannt. Allerdings werden hier nicht die notwendigen Eigenschaftskombinationen aufgezeigt, die erst einen Betrieb in der Brennstoffzelle möglich machen. Auch zielt die dort beschriebene Erfindung auf einen wasserfreien Leitfähigkeitsmechanismus ab, der durch die Wechselwirkung Säure/Base zustande kommt, und der deshalb einen Einsatz dieser Materialien bei Temperaturen über 100° C unter Normaldruck möglich macht.

Die Anwendung von Polybenzimidzolen in der Brennstoffzelle wird bereits von Savinell et al. in J. Electrochemical Soc., 141, 1994, S. L46-L48 beschrieben. Mischungen von verschiedenen Polymeren mit Polybenzimidazolen sind ebenfalls bekannt, z.B. aus der US-A-5,290,884.

Die Eignung aromatischer, nicht fluorierter Polymerer, wozu auch aromatische Polyetherketone gehören, für den Einsatz in Brennstoffzellen wird in der Literatur in Frage gestellt (A. Steck, Proc. 1st Inter. Symp. On New Materials For Fuel Cell Systems, Montreal 1995, pp 74).

Die Eigenschaften von polymeren Materialien durch die Beimischung von weiteren Komponenten zu verändern ist ein allgemein bekanntes Verfahren. Allerdings ist das Eigenschaftprofil von Polymermischungen nur schwer vorherzusehen. Es wird bezweifelt, daß es irgendeine Theorie gibt, die die komplexe Natur von Polymer-Polymer-Wechselwirkungen widerspiegelt (Macomolecules, Vol. 16, 1983, p 753-7).

Mit der Erfindung werden Zusammensetzungen bereitgestellt, aus denen leistungsfähige Membranen aus kostengünstigen Materialien hergestellt werden können. Mit den erfindungsgemäßen Zusammensetzungen wird darüber hinaus ein Material bereitgestellt, daß die Leistungsfähigkeit der herkömmlich eingesetzten fluorierten Standard-Materialien übertrifft. Ferner wird mit den erfindungsgemäßen Zusammensetzungen ein Material bereitgestellt, aus dem sich Membranen mit guten mechanischen Eigenschaften und gleichzeitig ausgezeichneter Protonenleitfähigkeit herstellen lassen.

Diese Eigenschaftskombination ist nicht zu erwarten gewesen und tritt bei anderen Polymermischungen nicht auf. So findet man beispielsweise von Zusammensetzungen aus sulfoniertem Polyetherketon und Polyethersulfon, daß bereits die Zugabe von geringen Mengen an Polyethersulfon zu einem deutlichen Absinken der Protonenleitfähigkeit

der Membranen aus diesem Material führt.

Die vorliegende Erfindung betrifft Zusammensetzungen enthaltend 30 - 99,5 Gew.% eines sulfonierten aromatischen Polyetherketons, das eine Ionenaustauscherkapazität von 1,3 bis 4,0 meq ($-SO_3H$)/g Polymer) aufweist, und 0,5-70 Gew.% eines Polybenzimidazols.

Die Ionenaustauscherkapazität (nachstehend auch "IEC" genannt) wird durch Elementaranalyse des gewaschenen und getrockneten Polymeren durch die Bestimmung des Verhältnisses von Kohlenstoff zu Schwefel (C/S-Quotient) ermittelt.

Unter aromatischen Polyetherketonen werden im Rahmen dieser Erfindung alle Polymere verstanden, die Struktureinheiten -Ar-O- und -Ar-CO- aufweisen, worin Ar für einen aromatischen Rest steht. Diese Struktureinheiten können auf verschiedene Art und Weise miteinander verknüpft sein, insbesondere in p-Stellung. Gemäß dem allgemeinen Sprachgebrauch bezeichnet man die erste Einheit als "E" (Ether) und die zweite Einheit als "K" (Keton). Je nach Abfolge der Ether- und Ketoneinheiten unterscheidet man z.B zwischen PEK, PEEK, PEKK oder PEEKK-Typen. Alle diese Polymertypen sind vom Begriff Polyetherketone im Sinne dieser Erfindung umfaßt. Bei den erfindungsgemäß zum Einsatz kommenden sulfonierten aromatischen Polyetherketonen kann es sich um beliebige Polymere handeln, beispielsweise um PEEK, PEKK, PEEKK oder insbesondere um PEK, solange diese die oben definierte Ionenaustauscherkapazität aufweisen.

Besonders bevorzugt werden Zusammensetzungen, bei denen das sulfonierte Polyetherketon die wiederkehrende Einheit der Formel I aufweist

$$-[Ar^1\text{-}O\text{-}Ar^2\text{-}CO]- , \qquad (I)$$

worin $Ar^1$ und $Ar^2$ unabhängig voneinander zweiwertige aromatische, gegebenenfalls mit ein oder mehreren unter Einsatzbedingungen inerten einwertigen organischen Gruppen substituierte Reste sind, und wobei zumindest ein Teil der Reste $Ar^1$ und $Ar^2$ mit Resten der Formel $-(SO_3)_wM$ substituiert ist, wobei M ein Metallkation der Wertigkeit w, ein Ammoniumkation oder insbesondere Wasserstoff ist, und w eine ganze Zahl bedeutet, insbesondere 1 oder 2. M ist vorzugsweise ein Kation eines Alkali- oder Erdalkalimetalls.

Bedeuten irgendwelche Reste zweiwertige aromatische Reste, so handelt es sich dabei um ein- oder mehrkernige aromatische Kohlenwasserstoffreste oder um heterocyclisch-aromatische Reste, die ein oder mehrkernig sein können. Im Falle von heterocyclisch-aromatischen Resten weisen diese insbesondere ein oder zwei Sauerstoff-, Stickstoff- oder Schwefelatome im aromatischen Rest auf.

Mehrkernige aromatische Reste können miteinander kondensiert sein oder über C-C-Bindungen oder über Brückengruppen, wie -O-, -S-, -CO-, $-SO_2-$ oder $-C_nH_{2n}$-miteinander verbunden sein, wobei n eine ganze Zahl von 1 bis 10 bedeutet.

Bei den zweiwertigen aromatischen Resten können die Valenzbindungen sich in para- oder in vergleichbarer koaxialer oder paralleler Position oder in meta- oder in vergleichbarer gewinkelter Position zueinander befinden.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind Biphenyl-4,4'-en-Bindungen. Ein Beispiel für parallel, entgegengesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste $Ar^1$ und $Ar^2$, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen, oder zweikernige kondensierte aromatische Reste mit parallelen, entgegengesetzt gerichteten Bindungen, insbesondere 1,4-, 1,5- und 2,6-Naphthylen, oder zweikemig über eine C-C Bindung verknüpfte aromatische Reste mit koaxialen, entgegengesetzt gerichteten Bindungen, insbesondere 4,4'-Biphenylen.

Die Valenzbindungen, die sich in meta- oder in vergleichbarer gewinkelter Position zueinander befinden, sind gewinkelt angeordnet.

Beispiele für bevorzugte zweiwertige aromatische Reste $Ar^1$ und $Ar^2$, deren Valenzbindungen sich in meta- oder in vergleichbarer gewinkelter Position zueinander befinden, sind einkernige aromatische Reste mit zueinander metaständigen freien Valenzen, insbesondere 1,3-Phenylen, oder zweikernige kondensierte aromatische Reste mit zueinander gewinkelt gerichteten Bindungen, insbesondere 1,6- und 2,7-Naphthylen, oder zweikernig über eine C-C Bindung verknüpfte aromatische Reste mit zueinander gewinkelt gerichteten Bindungen, insbesondere 3,4'-Biphenylen.

Bevorzugte Reste $Ar^1$ und $Ar^2$ sind 1,3-Phenylen oder insbesondere 1,4-Phenylen.

Die aromatischen Reste der erfindungsgemäß zum Einsatz kommenden Polymeren können mit inerten Gruppen substituiert sein. Darunter sind Substituenten zu verstehen, die die ins Auge gefaßte Anwendung nicht negativ beeinflussen.

Beispiele für solche Substituenten sind Alkyl-, Alkoxy-, Aryl-, Amino-, Alkohol-, Ether, Sulfonyl-, Phosphonyl-, Acyl-, Nitro-, Carbonsäure-, Carbonsäureester oder Carbonsäure-amidgruppen oder Halogen.

Unter Alkylgruppen sind verzweigte oder vorzugsweise geradkettige Alkylreste zu verstehen, beispielsweise Alkyl mit ein bis sechs Kohlenstoffatomen., insbesondere Methyl.

Unter Alkoxygruppen sind verzweigte oder vorzugsweise geradkettige Alkoxyreste zu verstehen, beispielsweise Alkoxyreste mit ein bis sechs Kohlenstoffatomen, insbesondere Methoxy.

Unter Aminogruppen sind Reste der Formel $-NH_2$, $-NHR^1$ oder $-NR^1 R^2$ zu verstehen, worin $R^1$ und $R^2$ unabhängig voneinander Alkyl- oder Arylreste, vorzugsweise Methyl, darstellen.

Unter Alkoholgruppen sind Reste der Formel -OH zu verstehen.

Unter Ethergruppen sind Reste der Formel $R^1$-O- zu verstehen, worin $R^1$ die oben angegebene Bedeutung besitzt.

Unter Sulfonylgruppen sind Reste der Formel $-SO_2R^1$ zu verstehen, worin $R^1$ die oben definierte Bedeutung besitzt.

Unter Phosphonylgruppen sind Reste der Formel $-P(OR^3)_3$ zu verstehen, worin die Reste $R^3$ unabhängig voneinander Wasserstoff, Alkyl oder Aryl sind.

Unter Acylgruppen sind Reste der Formel $-CO-R^3$ zu verstehen, worin $R^3$ die oben definierte Bedeutung besitzt.

Unter Carbonsäuregruppen sind Reste der Formel -COOH zu verstehen.

Unter Carbonsäureestergruppen sind Reste der Formel -COOR’ zu verstehen, worin $R^1$ die oben definierte Bedeutung besitzt.

Unter Carbonsäureamidgruppen sind Reste der Formel $-CONH_2$, $-CONHR^1$ oder - $CONR^1 R^2$ zu verstehen, worin $R^1$ und $R^2$ die oben definierte Bedeutung besitzen.

Bedeuten irgendwelche Reste Halogen, so handelt es sich dabei beispielsweise um Fluor, Brom oder insbesondere um Chlor.

Bevorzugt werden Zusammensetzungen, worin $Ar^1$ und $Ar^2$ Naphthylen oder insbesondere Phenylen sind.

Bevorzugt werden Zusammensetzungen, worin $Ar^1$ und $Ar^2$ mit ein bis vier Amino-, Alkohol-, Ether, Alkyl-, Aryl-, Sulfonyl-, Phosphonyl-, Acyl, Nitro-, Carbonsäure-, Carbonsäureester und/oder Carbonsäureamidgruppen substituiert sind und/oder worin die Stickstoffatome des Polybenzimidazols mit diesen Gruppen substituiert sind.
Besonders bevorzugt werden Zusammensetzungen, worin das sulfonierte Polyetherketon eine Ionenaustauscherkapazität von 1,6 bis 2,9 meq $(-SO_3H)$/g Polymer) aufweist.

Unter Polybenzimidazolen werden im Rahmen dieser Erfindung alle Polymere verstanden, die wiederkehrenden Struktureinheiten der Formel II aufweisen,

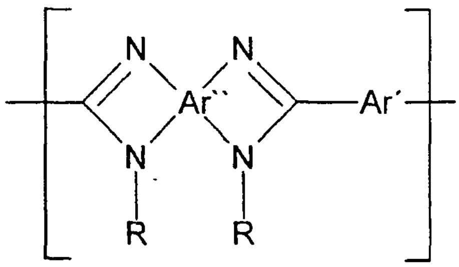

(II)

worin Ar’’ ein vierwertiger aromatischer Rest, Ar’ ein zweiwertiger aromatischer Rest und R Wasserstoff oder ein einwertiger inerter organischer Rest ist.

Bei den zweiwertigen aromatischen Resten Ar’ kann es sich wie bei $Ar^1$ und $Ar^2$ um ein- oder mehrkernige aromatische Kohlenwasserstoffreste oder um heterocyclisch-aromatische Reste, die ein- oder mehrkernig sein können, handeln. Bei Ar’ können sich die Valenzbindungen in para- oder in vergleichbarer koaxialer oder paralleler Position oder in meta- oder in vergleichbarer gewinkelter Position zueinander befinden. Beispiele für Reste Ar’ sind bereits weiter oben bei der Beschreibung der Reste Ar gegeben worden.

Bevorzugte Reste Ar’ sind 1,3-Phenylen oder insbesondere 1,4-Phenylen.

Bei den vierwertigen aromatischen Resten Ar" kann es sich ebenfalls um ein- oder mehrkernige aromatische Kohlenwasserstoffreste oder um heterocyclisch-aromatische Reste, die ein- oder mehrkernig sein können, handeln. Bei Ar" sind die Valenzbindungen jeweils paarweise so angeordnet, daß sich die beiden Imidazolringe ausbilden können.

Vorzugsweise befinden sich die jeweils zwei Valenzbindungen in ortho-Position zueinander und diese Paare wiederum befinden sich in gegenüberliegender Position am aromatischen Ring oder am Ringsystem.
Beispiele für bevorzugte Reste Ar" sind Phen-1,2,4,5-ylen, oder Biphen-3,4,3’,4’-ylen.

Weitere Polybenzimidazole und bevorzugte Reste Ar" und Ar’sind in der US-A-5,290,884 beschrieben, deren Beschreibung als Teil der vorliegenden Beschreibung gilt.

Die aromatischen Reste Ar’ und/oder Ar" der erfindungsgemäß zum Einsatz kommenden Polybenzimidazole

können mit inerten Gruppen substituiert sein. Darunter sind Substituenten zu verstehen, die die ins Auge gefaßte Anwendung nicht negativ beeinflussen. Beispiele dafür sind weiter oben bereits für die sulfonierten Polyetherketone bereits aufgezählt.

Besonders bevorzugt wird ein Polybenzimidazol der Formel II, worin Ar Phen-1,2,4,5-ylen oder Biphen-3,4,3',4'-ylen ist, Ar'1,3- oder 1,4-Phenylen bedeutet und R Wasserstoff ist.

Besonders bevorzugt sind Zusammensetzungen, worin der Anteil des Polybenzimidazols in Abhängigkeit vom Sulfonierungsgrad des sulfonierten Polyetherketons ausgewählt wird. Es wurde gefunden, daß es ein optimales Mischungsverhältnis zwischen sulfoniertem Polyetherketon und Polybenzimidazol gibt, das abhängig von der Ionenaustauscherkapazität des verwendeten Polyetherketons ist. Membranen, die aus derartigen Polymermischungen hergestellt wurden, weisen eine optimale Eigenschaftskombination zwischen E-Modul bei 80°C in Wasser, Quellverhalten bei 80°C und Protonenleitfähigkeit auf.

Für sulfonierte PEK-Typen der Formel I wurden gefunden, daß der Anteil des Polybenzimidazols in Abhängigkeit vom Sulfonierungsgrad des sulfonierten Polyetherketons vorzugsweise nach folgender Formel III ausgewählt werden sollte:

$$\text{Gewichtsprozent Polybenzimidazol} = 9{,}4\ x - 12{,}4 \pm (9{,}4\ x - 12{,}4) \times 0{,}5 \quad \text{(III)}.$$

Dabei bedeutet x die Ionenaustauscherkapazität des sulfonierten Polyetherketons in meq ($-SO_3H$)/g Polymer.

Das Molekulargewicht der in den erfindungsgemäßen Zusammensetzungen zum Einsatz kommenden Polymeren muß ausreichend sein, daß die Ausbildung von Polymerlösungen möglich ist, aus denen Formkörper, vorzugsweise Membranen ausgebildet werden können.

Die sulfonierten Polyetherketone weisen vorzugsweise Molekulargewichte (Zahlenmittel) im Bereich von 45.000 - 70.000 g/Mol auf, bestimmt durch Gelpermeationschromatographie in NMP mit Salzen unter Polystyrol-Eichung.

Die Polybenzimidazole weisen vorzugsweise eine intrinsische Viskosität im Bereich von 0,8 - 1,2, gemessen bei 25°C, auf.

Die erfindungsgemäßen Zusammensetzungen eignen sich besonders gut zur Herstellung von Membranen mit hervorragenden Gebrauchseigenschaften. Die Erfindung betrifft auch Membranen enthaltend die oben definierten Zusammensetzungen.

Die erfindungsgemäßen Membranen weisen üblicherweise eine Dicke von größer gleich 5 μm, vorzugsweise von mehr als 10 μm, besonders bevorzugt von 10 bis 100 μm. Für Anwendungen in der Brennstoffzelle beträgt die Dicke der Membranen in der Regel wenigstens 30 μm, für Anwendungen als Dielektrikum in Kondensatoren beträgt die Dicke der Membranen in der Regel wenigstens 5 μm.

In Abhängigkeit von der gewünschter Dicke der Membran kommen vorzugsweise Polymerlösungen mit unterschiedlicher Viskosität zum Einsatz. Für Membranen von 5 bis 50 μm Dicke verwendet man vorzugsweise Polymerlösungen mit einer Viskosität von 500 bis 2000 mPas (gemessen bei 80°C in einer Lösung der Polymeren in dem betreffenden Lösungsmittel). Für Membranen von 10 bis 100 μm Dicke verwendet man vorzugsweise Polymerlösungen mit einer Viskosität von 1500 bis 5000 mPas (gemessen bei 80°C in einer Lösung der Polymeren in dem betreffenden Lösungsmittel).

Die so hergestellten Membranen wurden vor allem im Hinblick auf ihre mechanische Stabilität im trockenen und im naßen Zustand, ihre Protonenleitfähigkeit und ihre Leistungen in der Brennstoffzelle überprüft.

Es wurde gefunden, daß sich die erfindungsgemäßen Membranen durch hervorragende elektrische Eigenschaften auszeichnen. Dazu zählen eine Ionenleitfähigkeit von nicht unter 50 mS/cm (gemessen in Kontakt mit flüssigem Wasser bei Raumtemperatur mit Hilfe der 4-Pol Impedanzspektroskopie bei einem Phasenwinkel $|\ominus|<1°$).

Es wurde gefunden, daß die Protonenleitfähigkeit bei hervorragenden mechanischen Eigenschaften im Bereich von 120-200 mS/cm bei 80°C liegt (gemessen mit Impedanzspektroskopie in 4-Pol-Technik in reinem Wasser). Die erfindungsgemäßen Membranen zeichnen sich durch hervorragende mechanische Eigenschaften aus. Dazu zählen ein E-Modul im trocknen Zustand bei 23°C und 50% rel. Feuchte von mindestens 600 MPa, ein E-Modul in Wasser bei 60°C von mindestens 90 MPa, ein E-Modul in Wasser bei 80°C von mindestens 50 MPa und eine Reißdehnung von über 200 %. Die E-Module wurden dabei jeweils als Steigung der Tangente bei 1,2 MPa bestimmt.

Es wurde also gefunden, daß eine Erhöhung der mechanischen Stabilität eintritt. So steigt das im Wasser festgestellte E-Modul (Steigung der Tangente bei 1,2 MPa) bis auf einen Wert von 350 $N/mm^2$ bei 80°C an. Das im Vergleich dazu bei reinen Materialien festgestellte E-Modul betrug lediglich 4-5 $N/mm^2$. Erstaunlicherweise sind bei Mischungen mit PES und PEEK (IEC 1,54 mmol/g Polymer) keine solchen Verhältnisse gefunden worden.

Die erfindungsgemäßen Membranen zeichnen sich ferner durch hervorragende Kochwasserbeständigkeit aus.

So wurde gefunden, daß erfindungsgemäßen Membranen auf Basis von sulfoniertem PEK nach einer 72-stündigen Behandlung in kochendem Wasser bei 100°C mechanisch stabil blieben.

Die erfindungsgemäße Membran weist vorzugsweise einen Restgehalt an Lösungmittel von weniger als 0,5 Gew.% auf.

Es wurde gefunden, daß Membranen aus sulfonierten PEEK mit einem IEC ab 1,5 meq ($-SO_3H$)/g (Polymer) (auf Basis von Victrex 450 PF) in kochendem Wasser nur für etwa 2-3 Stunden stabil sind. Überraschenderweise sind Membranen aus sulfonierten Polyetherketonen, z.B. auf Basis von Victrex PEK mit einem vergleichbarem IEC, in kochendem Wasser für mehr als 50 h stabil. Die Erfindung betrifft daher auch ein Polyetherketon vom Typ PEK, das eine Ionenaustauscherkapazität von 1,3 bis 4,0 meq ($-SO_3H$)/g Polymer) aufweist sowie eine daraus hergestellte Membran.

Ferner wurde gefunden, daß die infolge des Fehlens von -O-Ar-O- Einheiten elektronenarme Struktur des Polyetherketon-Polymerrückgrates besonders geeignet für Brennstoffzellenanwendungen zu sein scheint.

Sulfonierte Polyetherketone mit der Wiederholungseinheit -O-Ar-CO-Ar- lassen sich derzeit im technischen Maßstab bis etwa zu einem IEC von 4,0 meq ($-SO_3H$)/g (Polymer) herstellen.

Es wurde gefunden, daß Membranen aus solchen hochsulfonierten Polymeren oder Membranen aus Zusammensetzungen enthaltend solche hochsulfonierte Polymere und Polybenzimidazole besonders für Brennstoffzellen mit niedriger oder keiner Befeuchtung, aber auch für sogenannte Super-Caps, also Kondensatoren mit extrem hoher Kapazität zum Einsatz kommen können. Ferner kann die Membran in der Elektrodialyse oder in der Ultrafiltration angewendet werden. Die Erfindung betrifft auch die Verwendung der Membranen für diese Anwendungen.

Die Erfindung betrifft weiterhin ein Verfahren zur Herstellung der oben beschriebenen Membranen. Das Verfahren ist dadurch gekennzeichnet, daß

a) eine Lösung enthaltend 30 - 99,5 Gew.% eines Salzes eines sulfonierten Polyetherketons und 0,5-70 Gew.% eines Polybenzimidazols durch Auflösen der beiden Polymeren in einem geeigneten organischen Lösungsmittel, insbesondere Dimethylsulfoxid, N,N-Dimethylformamid, N,N-Dimethylacetamid oder N-Methyl-2-pyrrolidon hergestellt wird, und

b) diese Lösung nach an sich bekannten Verfahren, wie Gießen, Rakeln, Sprühen oder Schleudern zu einer Membran verformt wird.

Mischungen von Polybenzimidazolen und sulfonierten Polyetherketonen neigen, durch die vorhandene Säure-Base Wechselwirkung zur spontanen Gelation und können daher auch bei erhöhter Temperatur nicht oder nur schwer zu flächigen Gebilden wie Membranen weiterverarbeitet werden.
Eine homogene Lösung von sulfonierten Polytherketonen und Polybenzimidazolen kann man durch Einsatz der Salze, vorzugsweise der Li-, Na-, K- und
Ammoniumsalze, der Sulfonsäuren und Polybenzimidazol in trocknen organischen Lösungsmitteln, bevozugt DMSO, DMF, DMAc, NMP, herstellen. Die so erhaltene Lösung des Blends kann auf einen Träger aufgebracht werden und bei Temperaturen bis zu 160°C getrocknet werden.

Trotz des beschriebenen Umweges über die Salze der Sulfonsäure ist die beschriebene Herstelltechnik von großem Interesse, da mit dieser Membranen mit der Eigenschaftskombination hohe Protonenleitfähigkeit und hohes E-Modul bei 80°C in Wasser sowie geringem Quellverhalten hergestellt werden können.

Phaseninversionsmembranen für den Einsatz in der Ultrafiltration werden üblicherweise durch Einbrigen der Lösung des Polymers oder des Polymergemisches (z.B. sulfoniertes PEK/PBI in NMP oder in DMAc) und Ausfällen in einem Nicht-Lösungsmittel (z.B. Wasser) hergestellt.

Die Membran wird üblicherweise durch Konditionieren mit einer verdünnten Säure, bevorzugt eine verdünnte Mineralsäure, wie einer 0,1 - 20 % igen Säure (Schwefelsäure, Phosphorsäure, Salpetersäure), in die Säureform der Sulfonsäure überführt. Gleichzeitig werden durch diese Behandlung ionische (Salze) und organische Verunreinigungen (Lösungsmittelreste) entfernt.

Alternativ kann die Ammoniumform der Membran durch thermische Spaltung der Ammoniumgruppe (Freisetzung von $NH_3$) in die Säureform übergeführt werden.

Wahlweise kann die nach der oben beschriebenen Vorbehandlung erhaltene Membran noch mit Wasser gespült werden.

Danach kann die Membran durch Erhitzen getrocknet werden, bis z.B. der Restgehalt an Lösungmittel kleiner als 0,5 Gew.% beträgt.
Eine weitere bevorzugte Variante des erfindungsgemäßen Verfahrens betrifft die Herstellung einer Membran, worin die Lösung enthaltend 30 - 99,5 Gew.% des Salzes des sulfonierten Polyetherketons und 0,5 - 70 Gew.% des Polybenzimidazols in ein saugfähiges Vlies eingebracht wird, und das Lösungsmittel anschließend durch Verdampfen entfernt wird.

Die erfindungsgemäßen Membranen können naß und trocken zur Weiterverarbeitung eingesetzt werden.

Die folgenden Beispiele erläutern die Erfindung ohne diese zu begrenzen.

Beispiel 1:

Es wurden die Werte für die Protonenleitfähigkeit von Mischungen mit sulfoniertem PEK und PBI ermittelt. Das PEK wies einen IEC von 2,12 meq (-$SO_3$H)/g (Polymer) auf. Die Protonenleitfähigkeit wurde mit einer 4-Pol Anordnung gemessen. Das verwendete Elektrodenmaterial war Platin. Die Membran wurde während der Messung mit temperierten, vollentsalztem Wasser überströmt. Dicke und Breite der Membran wurden im naßen Zustand bei Raumtemperatur, nach der Behandlung mit 10 %iger Salpetersäure bei 40°C und Waschen mit vollentsalztem Wasser bei Raumtemperatur, bestimmt.

Das verwendete Meßgerät war ein Zahner IM 5d, umgerüstet für die Messung in einer 4-Pol Anordnung.

Die nachfolgende Tabelle zeigt die ermittelten Leitfähigkeitswerte für Membranen aus unterschiedlichen erfindungsgemäße Zusammensetzungen an.

| Temperatur (°C) | 5%PBI in PEKT2 | 6%PBI in PEKT2 | 7,5%PBI in PEKT2 | 10%PBI in PEKT2 | 20%PBI in PEKT2 |
|---|---|---|---|---|---|
| | Leitf. (S/cm) | Leitf. (S/cm) | Leitf. (S/cm) | Leitf. (S/cm) | Leitf. (S/cm) |
| 23 | 0,056282855 | 0,032303263 | 0,020937892 | 0,013605442 | 0,003425338 |
| 30 | 0,06373923 | 0,037894398 | 0,025139398 | 0,016196955 | 0,004068961 |
| 40 | 0,075557805 | 0,045612115 | 0,030444042 | 0,019729946 | 0,004964972 |
| 50 | 0,090157708 | 0,053875319 | 0,035936192 | 0,023627396 | 0,005839962 |
| 60 | 0,120093433 | 0,072562358 | 0,043677182 | 0,028423626 | 0,00668619 |
| 70 | 0,165000165 | 0,104427736 | 0,065316573 | 0,03554655 | 0,007445129 |
| 80 | 0,212844755 | 0,153029799 | 0,094613645 | 0,044791579 | 0,008032903 |
| 80 | 0,21159084 | 0,162716718 | 0,101837142 | 0,047391961 | 0,007758072 |
| 70 | 0,193606813 | 0,146548329 | 0,0927432 | 0,046527588 | 0,006821236 |
| 60 | 0,178111123 | 0,131412736 | 0,082758164 | 0,037013218 | 0,006063031 |
| 50 | 0,159793228 | | 0,073186886 | 0,033942891 | 0,005317593 |
| 40 | 0,143398472 | 0,101506097 | 0,063428635 | 0,028582862 | 0,004400614 |
| 30 | 0,12434795 | | 0,053606943 | 0,023420644 | 0,00363643 |
| 25 | 0,116734811 | 0,077666133 | 0,046482549 | 0,02159594 | 0,003248673 |

Beispiel 2: Herstellung der Blends am Beispiel der unter 1. eingesetzten Membran Das gemahlene sulfonierte Polymer wurde in einen Überschuß an 1 molarer Natronlauge eingetragen und bis auf eine Temperatur von 40 - 80°C erwärmt. Das Natriumsalz des sulfonsauren Polymers wurde über eine Nutsche abgesaugt und überschüssige Natronlauge abgepreßt. Schließlich wurde das Polymer neutral gewaschen und bis zur Gewichtskonstanz getrocknet.

Mit dem trocknen Polymer wurde mit Hilfe eines Zahnscheibenrührers eine 15-20 %ige Lösung in NMP hergestellt. Die klare Lösung wurde mit dem entsprechendem Anteil einer 15%igen Lösung von PBI in DMAc (hergestellt nach EP-A-816,415) versetzt und für mindestens 1h mit einem Zahnscheibenrührer gerührt. Nach der Filtration über ein PET-Tiefenfilter mit einer mittleren Porenweite von 0,7 $\mu$m bei 80°C wurde die Lösung auf eine Glasplatte durch Rakeln aufgebracht und in einem Umlufttrockenschrank bei Temperaturen zwischen 80 und 140°C über Nacht getrocknet.

Nach der Trocknung wurde die Folie von der Glasplatte getrennt und das Natriumsalz durch Behandlung mit 1 molarer Schwefelsäure bei 40°C entfernt. Die Membranen wurden mit vollentsalztem Wasser neutral gewaschen und getrocknet.

Beispiel 3: Sulfonierung von PEK

3,49 kg 98%ige Schwefelsäure wurden in einem beheizbaren Doppelmantelreaktiongefäß vorgelegt. Unter Rühren mit einer Zahnscheibe wurden möglich schnell 400 g Victrex PEK in die Lösung eingetragen. Die Temperatur wurde auf 50°C erhöht. Sobald eine klare, rote Lösung erhalten worden war, wurden 2,40 kg Oleum (20 % freies $SO_3$) zugegeben. Sobald der gewünschte Sulfonierungsgrad (bei einem IEC von 2,12 meq (-$SO_3$H)/g (Polymer) etwa nach 1-2 Stunden) erreicht worden war, wurde die Lösung auf 20°C abgekühlt und das Polymer in destilliertem Wasser

ausgefällt.

Das Polymer wurde abgesaugt, neutral gewaschen (Test mit $BaCl_2$-Lösung) und bei 60 - 120°C im Umlufttrokkenschrank getrocknet.

Beispiel 4: Mechanische Daten der nach Beispiel 3 hergestellten Membranen

| IEC des PEK | Gehalt an PBI [%] | E-Modul, 23°C, 50 % rel. Feuchte [MPa] | Reißdehnung [%] | E-Modul 60°C, Wasser* [MPa] | Reißdehnung [%] |
|---|---|---|---|---|---|
| | | | | | |
| 2.12 | 0 | 695 | 121 | 7 | 200 |
| 2.12 | 5 | 1140 | 72 | 536 | 284 |
| 2.12 | 7.5 | 725 | 30 | 158 | 288 |
| 2.12 | 10 | 646 | 28 | 195 | 300 |
| 2.12 | 12.5 | 1445 | 111 | 124 | 370 |
| 2.12 | 17.5 | 636 | 26 | 110 | 231 |
| 2.12 | 20 | 1058 | 40 | 100 | 235 |
| *gemessen in Wasser, E-Modul in Wasser bestimmt als Steigung der Tangente bei 1,2 MPa | | | | | |

**Patentansprüche**

**1.** Membran mit einer Dicke von wenigstens 5 µm enthaltend

(i) 30 - 99,5 Gew.% eines sulfonierten aromatischen Polyetherketons, das eine Ionenaustauscherkapazität von 1,3 bis 4,0 meq ($-SO_3H$)/g Polymer, und
(ii) 0,5-70 Gew.% eines Polybenzimidazols
erhältlich durch ein Verfahren umfassend folgende Maßnahmen:

a) Herstellung einer Lösung enthaltend 30 - 99,5 Gew.% eines sulfonierten Polyetherketons und 0,5-70 Gew.% eines Polybenzimidazols durch Auflösen des Salzes des sulfonierten Polyetherketons und des Polybenzimidazols in einem geeigneten organischen Lösungsmittel,
b) Erzeugen einer Membran mit der gemäß Maßnahme a) erhaltenen Lösung mittels an sich bekannten Verfahren
c) Waschen der gemäß Maßnahme b) erhaltenen Membran mit Wasser oder einer verdünnten 0,1 - 20 % igen Säure

ausgenommen (i) eine Polymerblendmembranen umfassend (A) 75-97 Gew.-% eines sulfonierten aromatischen Polyetherketons der Formel

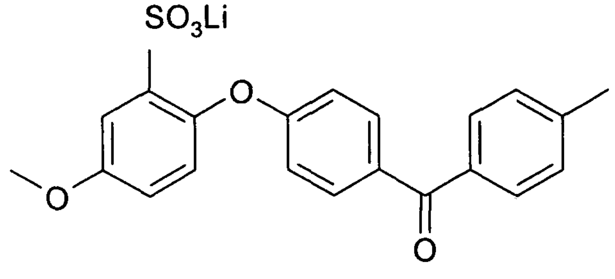

mit einer Ionenaustauscherkapazität von 2,7 meq (-$SO_3H$)/g Polymer und (B) 3-25 Gew.-% eines Polybenzimidazols, (ii) eine Membran aus 80,15 Gew.-% sulfonierten Poly(etheretherketon) mit einer Ionenaustauscherkapazität von 1,8 meq (-$SO_3H$)/g Polymer und 19,85 Gew.-% Poly-[2,2'-m-phenylen]-5,5'-bibenzimidazol und (iii) eine Membran aus 67,77 Gew.-% sulfonierten Poly(etheretherketon) mit einer Ionenaustauscherkapazität von 1,9 meq (-$SO_3H$)/g Polymer, 22,59 Gew.-% Poly-[2,2'-m-phenylen]-5,5'-bibenzimidazol und 9,64 Gew.-% Poly(sulfon-ortho-sulfon-diamin).

2. Membran nach Anspruch 1, **dadurch gekennzeichnet, daß** diese eine Dicke von wenigstens 30 $\mu$m aufweist.

3. Membran nach Anspruch 1 oder 2, **dadurch gekennzeichnet, daß** diese eine Ionenleitfähigkeit, gemessen in Kontakt mit flüssigem Wasser bei Raumtemperatur mit Hilfe der 4-Pol Impedanzspektroskopie bei einem Phasenwinkel $|\Theta| < 1°$, von nicht unter 50 mS/cm aufweist.

4. Membran nach Anspruch 1 oder 2, **dadurch gekennzeichnet, daß** diese einen E-Modul (bestimmt als Steigung der Tangente bei 1,2 MPa) im trocknen Zustand bei 23°C und 50% rel. Feuchte von mindestens 600 MPa aufweist.

5. Membran nach Anspruch 1 oder 2, **dadurch gekennzeichnet, daß** diese einen E-Modul (bestimmt als Steigung der Tangente bei 1,2 MPa) in Wasser bei 60°C von mindestens 90 MPa und eine Reißdehnung von über 200 % aufweist.

6. Membran nach Anspruch 1 oder 2, **dadurch gekennzeichnet, daß** diese einen Restgehalt an Lösungmittel von weniger als 0,5 Gew.% aufweist.

7. Membran nach Anspruch 1 oder 2, **dadurch gekennzeichnet, daß** ein sulfoniertes Polyetherketon enthaltend wiederkehrende Einheiten der Formel I

-[Ar1-O-Ar2-CO]- , (I)

worin
Ar1 und Ar2 unabhängig voneinander zweiwertige aromatische oder heteroaromatische, gegebenenfalls mit ein oder mehreren unter Einsatzbedingungen inerten einwertigen organischen Gruppen substituierte Reste sind, und wobei zumindest ein Teil der Reste Ar1 und Ar2 mit Resten der Formel -(SO3)WM substituiert ist, wobei M ein Metallkation der Wertigkeit w, oder ein Ammoniumkation ist und w eine ganze Zahl 1 oder 2 bedeutet, eingesetzt wird.

8. Membran nach Anspruch 7, **dadurch gekennzeichnet, daß** $Ar^1$ und $Ar^2$ Naphthylen oder insbesondere Phenylen sind.

9. Membran nach Anspruch 8, **dadurch gekennzeichnet, daß** $Ar^1$ und $Ar^2$ mit ein bis vier Amino-, Alkohol-, Ether-, Alkyl-, Aryl-, Sulfonyl-, Phosphonyl-, Carbonyl-, Nitro-, Carbonsäuregruppen substitutiert sind und/oder daß die Stickstoffatome des Polybenzimidazols mit diesen Gruppen substituiert sind.

10. Membran nach Anspruch 1 oder 2, **dadurch gekennzeichnet, daß** das Polybenzimidazol wiederkehrenden Struktureinheiten der Formel II aufweist

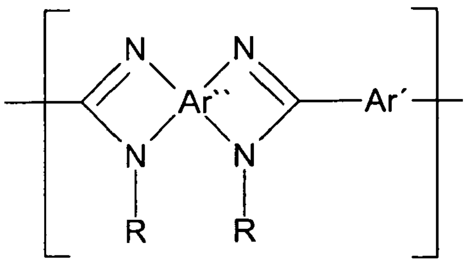

(II)

worin Ar'' ein vierwertiger aromatischer Rest, Ar' ein zweiwertiger aromatischer Rest und R Wasserstoff oder ein einwertiger inerter organischer Rest ist.

**11.** Membran nach Anspruch 10, **dadurch gekennzeichnet, daß** Ar'' Phen-1,2,4,5-ylen oder Biphen-3,4,3',4'-ylen ist, Ar'1,3- oder 1,4-Phenylen bedeutet und R Wasserstoff ist.

**12.** Membran nach Anspruch 1 oder 2, **dadurch gekennzeichnet, daß** als sulfoniertes aromatisches Polyetherketon ein Polymer vom Typ PEK, das eine Ionenaustauscher-kapazität von 1,3 bis 4,0 meq (-SO3H)/g Polymer aufweist eingesetzt wird.

**13.** Membran nach Anspruch 1 oder 2, **dadurch gekennzeichnet, daß** das sulfonierte Polyetherketon in Form des Lithium, Natrium, Kalium oder Ammoniumsalz eingesetzt wird.

**14.** Membran nach Anspruch 1 oder 2, **dadurch gekennzeichnet, daß** der Anteil des Polybenzimidazols in Abhängigkeit vom Sulfonierungsgrad des sulfonierten Polyetherketons nach folgender Formel III ausgewählt wird:

$$\text{Gewichtsprozent Polybenzimidazol} = 9{,}4\,x - 12{,}4 \pm (9{,}4\,x - 12{,}4) \times 0{,}5 \qquad \text{(III)},$$

wobei x die Ionenaustauscherkapazität des sulfonierten Polyetherketons in meq (-SO3H)/g Polymer) bedeutet.

**15.** Membran nach Anspruch 1 oder 2, **dadurch gekennzeichnet, daß** die gemäß Maßnahme a) erhaltene Lösung eine Viskosität von 500 - 5000 mPas (gemessen bei 80°C in einer Lösung der Polymeren in NMP (N-Methylpyrrolidon) mit einem Rotationsviskosimeter nach Couette) aufweist.

**16.** Membran nach Anspruch 1 oder 2, **dadurch gekennzeichnet, daß** gemäß Maßnahme c) Salpetersäure, Schwefelsäure oder Phosphorsäure eingesetzt werden.

**17.** Verwendung der Membran nach einem der Ansprüche 1 bis 16 für den Einsatz in Brennstoffzellen, insbesondere für den Einsatz in Direkt-Methanol-Brennstoffzellen.

Europäisches Patentamt
European Patent Office
Office européen des brevets

## EUROPÄISCHER RECHERCHENBERICHT

Nummer der Anmeldung
EP 08 01 4127

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 96/29360 A (CLAUSS JOACHIM ;DECKERS GREGOR (DE); HOECHST AG (DE); WITTELER HEL) 26. September 1996 (1996-09-26)<br>* Seite 1, Absatz 1 *<br>* Seite 7, Zeile 6 - Seite 9, Zeile 2 *<br>* Seite 14, Zeile 3 - Zeile 14 *<br>* Seite 20 - Seite 21; Ansprüche 1,4,18; Tabelle 3 *<br>----- | 1-17 | INV.<br>B01D71/52<br>C08L71/00<br>C08G73/18<br>C08J5/22<br>H01M8/02<br>H01M8/10<br>B01J39/18<br>B01D61/14<br>B01D61/42 |
| A | EP 0 816 415 A (HOECHST JAPAN)<br>7. Januar 1998 (1998-01-07)<br>* Seite 2, Zeile 27 - Seite 4, Zeile 36; Ansprüche 1-8; Beispiel 1 *<br>----- | 1-17 | |
| A,D | WO 98/07164 A (KREUER KLAUS DIETER ;FRANK GEORG (DE); FUCHS ANNETTE (DE); MAIER J) 19. Februar 1998 (1998-02-19)<br>* Seite 2, letzte Zeile - Seite 3, Zeile 13 *<br>* Seite 4, Zeile 6 - Zeile 12 *<br>* Seite 5, Absatz 4 - Seite 5, letzte Zeile *<br>* Seite 6, Zeile 9 - Zeile 10 *<br>----- | 1-17 | RECHERCHIERTE SACHGEBIETE (IPC) |
| A | DATABASE WPI<br>Section Ch, Week 199148<br>Thomson Scientific, London, GB;<br>Class A26, AN 1991-349040<br>XP002137337<br>& JP 03 232536 A (TOKYO ELECTRIC POWER CO)<br>16. Oktober 1991 (1991-10-16)<br>* Zusammenfassung *<br>-----<br>-/-- | 1-17 | B01D<br>C08L<br>C08G<br>C08J<br>B01J<br>H01M |

Der vorliegende Recherchenbericht wurde für alle Patentansprüche erstellt

| Recherchenort | Abschlußdatum der Recherche | Prüfer |
|---|---|---|
| München | 3. November 2008 | Edmueller, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

4

EPO FORM 1503 03.82 (P04C03)

Europäisches Patentamt
European Patent Office
Office européen des brevets

# EUROPÄISCHER RECHERCHENBERICHT

Nummer der Anmeldung
EP 08 01 4127

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | JOURNAL OF POLYMER SCIENCE: POLYMER CHEMISTRY EDITION,<br>Bd. 23, 1985, Seiten 2205-2223, XP000601636<br>insbesondere Seite 2212, Punkt "Sulfonation of the Polymers" und Tabelle IV<br>----- | 1-17 | |
| A,D | EP 0 688 824 A (HOECHST AG)<br>27. Dezember 1995 (1995-12-27)<br>* Seite 2, Zeile 1 - Zeile 3 *<br>* Seite 2, Zeile 42 - Seite 6, Zeile 13; Beispiele 1-22 *<br>----- | 1-17 | |
| E | WO 99/54407 A (UNIV STUTTGART [DE]; KERRES JOCHEN [DE]; ULRICH ANDREAS [DE]; HAERING)<br>28. Oktober 1999 (1999-10-28)<br>* Seite 7, Zeile 29 - Seite 8, Zeile 23; Beispiele 1,3 *<br>----- | 1-17 | |
| | | | RECHERCHIERTE SACHGEBIETE (IPC) |

Der vorliegende Recherchenbericht wurde für alle Patentansprüche erstellt

4

| Recherchenort | Abschlußdatum der Recherche | Prüfer |
|---|---|---|
| München | 3. November 2008 | Edmueller, Peter |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 08 01 4127

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-11-2008

| Im Recherchenbericht angeführtes Patentdokument | | Datum der Veröffentlichung | Mitglied(er) der Patentfamilie | | Datum der Veröffentlichung |
|---|---|---|---|---|---|
| WO 9629360 | A | 26-09-1996 | CA | 2215911 A1 | 26-09-1996 |
| | | | EP | 0815160 A1 | 07-01-1998 |
| | | | JP | 4062364 B2 | 19-03-2008 |
| | | | JP | 11502249 T | 23-02-1999 |
| EP 0816415 | A | 07-01-1998 | CA | 2209079 A1 | 05-01-1998 |
| | | | DE | 69730564 D1 | 14-10-2004 |
| | | | DE | 69730564 T2 | 13-10-2005 |
| | | | JP | 3607004 B2 | 05-01-2005 |
| | | | JP | 10017669 A | 20-01-1998 |
| | | | US | 5902876 A | 11-05-1999 |
| WO 9807164 | A | 19-02-1998 | DE | 19632285 A1 | 19-02-1998 |
| | | | EP | 0917716 A1 | 26-05-1999 |
| | | | JP | 2000517462 T | 26-12-2000 |
| | | | US | 6264857 B1 | 24-07-2001 |
| JP 3232536 | A | 16-10-1991 | KEINE | | |
| EP 0688824 | A | 27-12-1995 | DE | 4422158 A1 | 04-01-1996 |
| | | | JP | 3851363 B2 | 29-11-2006 |
| | | | JP | 8020716 A | 23-01-1996 |
| WO 9954407 | A | 28-10-1999 | AT | 258570 T | 15-02-2004 |
| | | | AU | 769177 B2 | 15-01-2004 |
| | | | AU | 3821699 A | 08-11-1999 |
| | | | BR | 9909720 A | 26-12-2000 |
| | | | CA | 2324963 A1 | 28-10-1999 |
| | | | CN | 1297467 A | 30-05-2001 |
| | | | DE | 19817374 A1 | 21-10-1999 |
| | | | DK | 1076676 T3 | 01-06-2004 |
| | | | EP | 1076676 A2 | 21-02-2001 |
| | | | ES | 2222031 T3 | 16-01-2005 |
| | | | HK | 1034989 A1 | 19-11-2004 |
| | | | JP | 3688201 B2 | 24-08-2005 |
| | | | JP | 2002512291 T | 23-04-2002 |
| | | | MX | PA00010192 A | 06-08-2002 |
| | | | US | 6723757 B1 | 20-04-2004 |
| | | | ZA | 200005736 A | 17-01-2002 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9629359 A
- WO 9629360 A
- EP 0152161 A
- EP 0688824 A
- WO 9807164 A
- US 5290884 A
- EP 816415 A


### In der Beschreibung aufgeführte Nicht-Patentliteratur


- **VON A. STECK.** *Proc. 1st Inter. Symp. On New Materials For Fuel Cell Systems,* 1995, 74
- **C.A. LINKOUS et al.** *Int. J. Hydrogen Energy,* 1998, vol. 23 (7), 525-9
- *J. Polym. Sci.,* 1985, vol. 23, 2205-2222
- **VON SAVINELL et al.** *J. Electrochemical Soc.,* 1994, vol. 141, L46-L48
- **A. STECK.** *Proc. 1st Inter. Symp. On New Materials For Fuel Cell Systems,* 1995, 74
- *Macomolecules,* 1983, vol. 16, 753-7